Europäisches Patentamt

European Patent Office

Office européen des brevets

(19)

(11) **EP 1 359 700 A1**

(12) **EUROPEAN PATENT APPLICATION**

(43) Date of publication:
**05.11.2003 Bulletin 2003/45**

(51) Int Cl.[7]: **H04L 5/02**, H04L 25/03,
H04L 27/26

(21) Application number: **02291107.7**

(22) Date of filing: **02.05.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Mitsubishi Electric Information
Technology Centre Europe B.V.
1119 NS Schiphol Rijk (NL)**

(72) Inventor: **Mottier, David, Mitsubishi Electric ITE
35700 Rennes (FR)**

(74) Representative: **Maillet, Alain
Cabinet le Guen & Maillet,
5, Place Newquay,
B.P. 70250
35802 Dinard Cedex (FR)**

(54) **MC-CDMA receiver with an equalisation per subcarrier**

(57)     Method for performing an equalisation in a MC-CDMA receiver, a symbol transmitted to said receiver being spread with a spreading sequence over a plurality ($N$) of carriers, the signal received by said receiver being decomposed into a plurality of frequency components ($r_\ell$), characterised by estimating (331) relative power values on each of said carriers, calculating (333) a plurality of equalisation coefficients ($q_\ell$) from the estimated relative power values ($P_\ell,(\mu.P_\ell)$) and multiplying ($334_0,..,334_{L-1}$) each of said frequency components by one of said equalisation coefficients.

**Fig. 3**

**Description**

The present invention relates to a method for performing an equalisation per carrier in a MC-CDMA telecommunication system. The present invention relates also to a MC-CDMA receiver implementing such an equalisation method.

Multi-Carrier Code Division Multiple Access (MC-CDMA) combines OFDM (Orthogonal Frequency Division Multiplex) modulation and the CDMA multiple access technique. This multiple access technique was proposed for the first time by N. Yee et al. in the article entitled "Multicarrier CDMA in indoor wireless radio networks" which appeared in Proceedings of PIMRC'93, Vol. 1, pages 109-113, 1993. The developments of this technique were reviewed by S. Hara et al. in the article entitled "Overview of Multicarrier CDMA" published in IEEE Communication Magazine, pages 126-133, December 1997.

Unlike the DS-CDMA (Direct Spread Code Division Multiple Access) method, in which the signal of each user is multiplied in the time domain in order to spread its frequency spectrum, the signature here multiplies the signal in the frequency domain, each element of the signature multiplying the signal of a different sub-carrier.

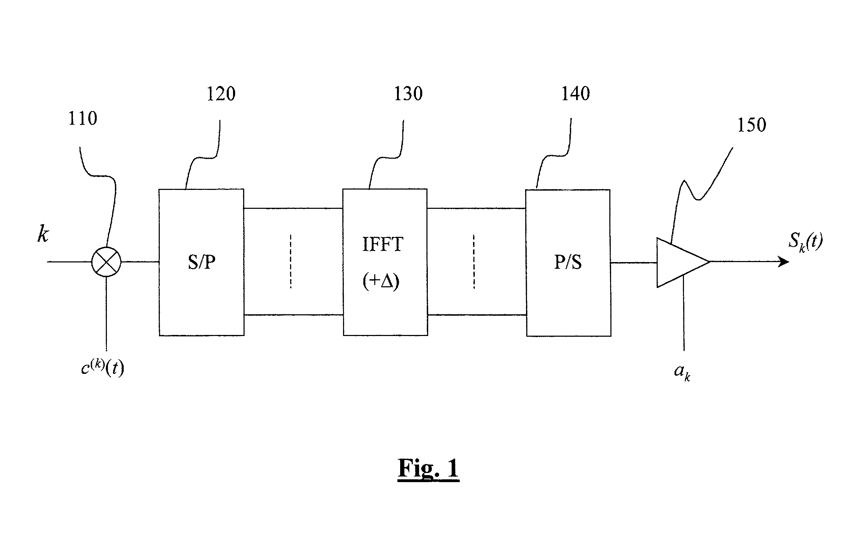

More precisely, Fig. 1 illustrates the structure of an MC-CDMA transmitter for a given user $k$. We consider here the forward link, i.e. we suppose that the transmitter is located at the base station. Let $d^{(k)}(n)$ be the symbol to be transmitted to user $k$ at time $nT$, where $d^{(k)}(n)$ belongs to the modulation alphabet. The symbol $d^{(k)}(n)$ is first multiplied at 110 by a spreading sequence or signature of the user, denoted $c^{(k)}(t)$, consisting of $N$ "chips" or signature elements, each "chip" being of duration $T_c$, the total duration of the spreading sequence corresponding to a symbol period $T$. The results of the multiplication of the symbol $d^{(k)}(n)$ by the different "chips" are converted by the serial to parallel converter 120 into a block of $L$ symbols, where $L$ is in general a multiple of $N$. Without loss of generality, we assume otherwise specified in the following that $N=L$ and we denote the elements (i.e. the values of the chips) of the sequence for user $k$: $c_\ell^{(k)}$, $\ell =0,..,L-1$. The block of $L$ symbols output from 120 is subjected to an inverse fast Fourier transformation (IFFT) in the module 130. In order to prevent intersymbol interference, a guard interval of length typically greater than the duration of the impulse response of the transmission channel, is added to the MC-CDMA symbol. This is achieved in practice by appending a prefix (denoted $\Delta$) identical to the end of the said symbol. After being serialised in the parallel to serial converter 140, the MC-CDMA symbols are amplified at 150 in order to be transmitted over the downlink user channel. The MC-CDMA method can therefore be analysed into a spreading in the spectral domain (before IFFT) followed by an OFDM modulation.

In practice, the user $k$ transmits his data in the form of frames of symbols $d^{(k)}(n)$, each symbol being spread by a real signature $c^{(k)}(t)$, with a duration equal to the symbol period $T$, i.e. $c^{(k)}(t)=0$ if $t \notin [0,T[$ and

$$c^{(k)}(t) = \sum_{\ell=0}^{L-1} c_\ell^{(k)} \delta(t - \ell T_c)$$

if $t \in [0, T[$.

The signal $S_k(t)$ at time $t$ transmitted to a user $k$ can therefore be written, if we omit the prefix:

$$S_k(t) = a_k . \sum_{\ell=0}^{L-1} c^{(k)}(t).d^{(k)}(n)\exp(j.2\pi(\ell t / L) \qquad (1)$$

where $a_k$ is the amplitude coefficient of the signal transmitted to user $k$, assumed to be constant over a transmission frame. Hence, the resulting signal transmitted onto a downlink channel can be expressed, if we omit the prefixes:

$$S_k(t) = \sum_{k=0}^{K-1}\sum_{\ell=0}^{L-1} a_k c^{(k)}(t).d^{(k)}(n)\exp(j.2\pi(\ell t / L) \qquad (2)$$

where $K$ is the number of users.

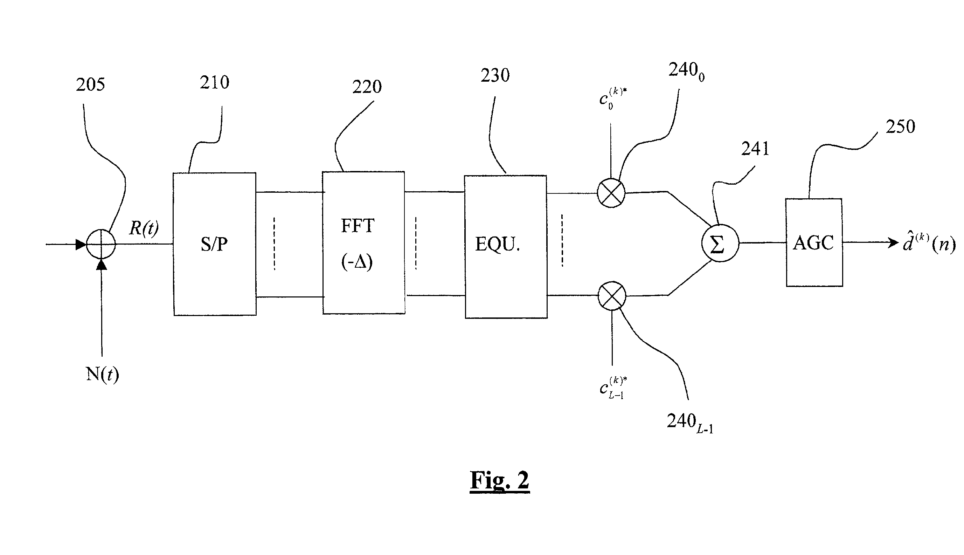

A MC-CDMA receiver for a given user $k$ has been illustrated schematically in Fig. 2. This receiver is known in the literature as single-user detection receiver (or SUD receiver) because the detection takes only into account the symbols transmitted to (or from) the user in question.

After having propagated over the downlink transmission channel, the signal received is demodulated and sampled at the "chip" frequency $1/T_c$. We assume that the channel is disturbed by an AWGN (Additive White Gaussian Noise) N(t) as illustrated by adder 205 in Fig. 2. The samples of the received signal are then supplied to a serial to parallel converter 210 and stripped from the prefix ($\Delta$) before undergoing an FFT in module 220. The signal on a subcarrier $\ell$ at the output of 220 can be expressed:

$$r_\ell(n) = h_\ell(n) \sum_{k=0}^{K-1} a_k c_\ell^{(k)} d^{(k)}(n) + n_\ell(n) \tag{3}$$

or, equivalently:

$$r_\ell(n) = h_\ell(n) \sum_{k=0}^{K-1} D_\ell^{(k)}(n) + n_\ell(n) \quad \text{with} \quad D_\ell^{(k)} = a_k c_\ell^{(k)} d^{(k)}(n) \tag{4}$$

where $h_\ell(n)$ represents the response of the downlink channel at the frequency of the subcarrier $\ell$ of the MC-CDMA symbol transmitted at time $nT$ and where $n_\ell$ is the noise component on subcarrier $\ell$. In the following, the time index $n$ will be omitted for the sake of simplicity.

In MC-CDMA, the presence of the guard interval makes it possible to neglect the intersymbol interference (provided the guard interval is longer than the delay spread of the channel). Hence, for a given subcarrier (hereinafter simply called carrier), the equalisation can be performed by a single tap, i.e. by a multiplication by a complex coefficient. Such equalisation, also called *per carrier* equalisation consists in applying one of the known equalisation methods e. g. ZF (Zero Forcing), MMSE (Minimum Mean Square Error), independently on each carrier.

The equalisation coefficients are denoted $q_\ell^{(k)}$, $\ell=0,..,L$-1 for the SUD receiver dedicated to the user $k$. The samples in the frequency domain are respectively multiplied by the equalisation coefficients $q_\ell^{(k)}$ in 230. It is assumed in the following that a MMSE criterion is chosen, i.e. that a MMSE equalisation *per carrier* is used.

In such instance, the equalisation coefficients are given by:

$$q_\ell^{(k)} = \frac{a_k \hat{h}_\ell^*}{\left|\hat{h}_\ell\right|^2 \cdot \sum_{k=0}^{K-1} a_k^2 + \sigma_\ell^2} \tag{5}$$

where $\sigma_\ell$ is the variance of the noise component on carrier $\ell$, $\hat{h}_\ell$ is an estimate of $\hat{h}_\ell$ and .* denotes the complex conjugate. The estimate $h_\ell$ is generally obtained by transmitting pilot symbols at regular intervals over the transmission channel.

In practice, since the multiplying coefficient $a_k$ appearing at the numerator of (5) is the same for all the carriers, it can be omitted and the compensation for amplitude coefficient variations is ensured by an automatic gain control (AGC) as described further below. If an AGC is used the equalisation coefficients may therefore be expressed as:

$$q_\ell^{(k)} = \frac{\hat{h}_\ell^*}{\left|\hat{h}_\ell\right|^2 \cdot \sum_{k=0}^{K-1} a_k^2 + \sigma_\ell^2} \tag{5'}$$

After equalisation, the frequency components are despread i.e. they are multiplied by the conjugated signature of the user $k$ in $240_0,...240_{L-1}$ before being added in 241. The result is then normalised by automatic gain control 250 to give an estimation $d_k(n)$ of the transmitted symbol $d_k(n)$. In fact $d_k(n)$ is a decision variable which can be used as such (soft detection) or subjected to a hard decision (not shown). For the sake of simplicity, we keep hereinafter the same notation in both cases.

The calculation of the equalisation coefficients according to equation (5) or (5') necessitates to know in particular the number of users $K$ and the amplitude coefficients $a_k$. Since the receiver cannot determine these values, they have to be sent at regular intervals by the MC-CDMA transmitter over the transmission channel, at the expense of the payload.

The problem underlying the invention is to propose a method for performing an equalisation per carrier which uses less transmission resources than in the prior art.

This problem is solved by the equalisation method defined in claim 1 Advantageous embodiments of the invention are set out in the dependent claims. The invention is also defined by a MC-CDMA receiver as set out in claim 6 or 7.

The characteristics of the invention will emerge from a reading of the following description given in relation to the accompanying figures, amongst which:

Fig. 1 depicts schematically the structure of a MC-CDMA transmitter known from the state of the art;
Fig. 2 depicts schematically the structure of a MC-CDMA receiver using a MMSE per carrier equalisation known from the state of the art;
Fig. 3 depicts schematically a method for obtaining equalisation coefficients used in the equalisation method according to the invention;
Fig. 4 depicts schematically the structure of a MC-CDMA receiver with parallel interference cancellation;
Fig. 4A depicts a first stage of the MC-CDMA receiver illustrated in Fig. 4;
Fig. 4B depicts a second stage of the MC-CDMA receiver illustrated in Fig. 4;
Fig. 5 depicts schematically the structure of a MC-CDMA receiver with serial interference cancellation;
Fig. 5A depicts a first stage of the MC-CDMA receiver illustrated in Fig. 5;
Fig. 5B depicts a second stage of the MC-CDMA receiver illustrated in Fig. 5.

The basic idea underlying the invention is to derive the value of the denominator of the expression (5) or (5') defining the equalisation coefficients from estimates of the power received on the different carriers.

We refer back to the context of a MC-CDMA receiver with per carrier equalisation where the equalisation coefficients are determined to satisfy the MMSE criterion. If an automatic gain control is used as in Fig. 2, the equalisation coefficients can be determined by:

$$q_\ell^{(k)} = \frac{h_\ell^*}{|h_\ell|^2 \cdot \sum_{k=0}^{K-1} a_k^2 + \sigma_\ell^2} \qquad (6)$$

On the other hand, the power received on a given carrier can be expressed as follows:

$$P_\ell = |h_\ell|^2 \cdot \sum_{k=0}^{K-1} E(|D_k|^2) + \sigma_\ell^2 \qquad (7)$$

where $E$ denotes the mathematical expectation. The first term represents the signal power and the second term is the noise power on the carrier. Without loss of generality, we may assume that the emitted symbols and the spreading codes are normalised:

$$P_\ell = |h_\ell|^2 \cdot \sum_{k=0}^{K-1} a_k^2 + \sigma_\ell^2 \qquad (8)$$

The power received on a given carrier can be estimated by:

$$\hat{P}_\ell = \frac{1}{N_s} \cdot \sum_{n=1}^{N_s} |r_\ell(n)|^2 \qquad (9)$$

where $N_s$ is the number of consecutive symbols taken into account in the averaging process. It should be understood that any estimate suitable for estimating the power on the different carriers can be used. For example, the power estimation can be performed by filtering the samples $|r_\ell(n)|^2$ with a low-pass filtering of the recursive type as:

$$\hat{P}_\ell(n) = (1-\alpha) \cdot \hat{P}_\ell(n\text{-}1) + \alpha \cdot |r_\ell(n)|^2 \qquad (10)$$

where $\alpha$ is a forgetting factor which is preferably taken equal to $2^{-P}$ and $P$ is a positive integer.

From the expressions (6) and (8), the equalisation coefficients can be calculated as follows:

$$q_\ell^{(k)} = \frac{\hat{h}_\ell^*}{\hat{P}_\ell} \qquad (11)$$

More generally, it suffices to have estimates proportional to the channel coefficients $h_\ell$ and /or proportional to the power values $P_\ell$. In other words, the channels coefficients and/or the power values can be simply be estimated relatively to each other. If $\lambda$ and $\mu$ are the proportionality factors for the channel coefficient estimate and the power estimate respectively, we may choose as equalisation coefficients:

$$q_\ell^{(k)} = \frac{(\lambda . \hat{h}_\ell)^*}{(\mu . \hat{P}_\ell)} \qquad (12)$$

where

$$(\lambda . \hat{h}_\ell)$$

and

$$(\mu . \hat{P}_\ell)$$

are the estimates proportional to the channel coefficients and the power values respectively. The proportionality factors $\lambda$ and $\mu$ have no influence on the equalisation since they are common to all the carriers. They may also be time dependent since the automatic gain mentioned above would compensate for such variations.

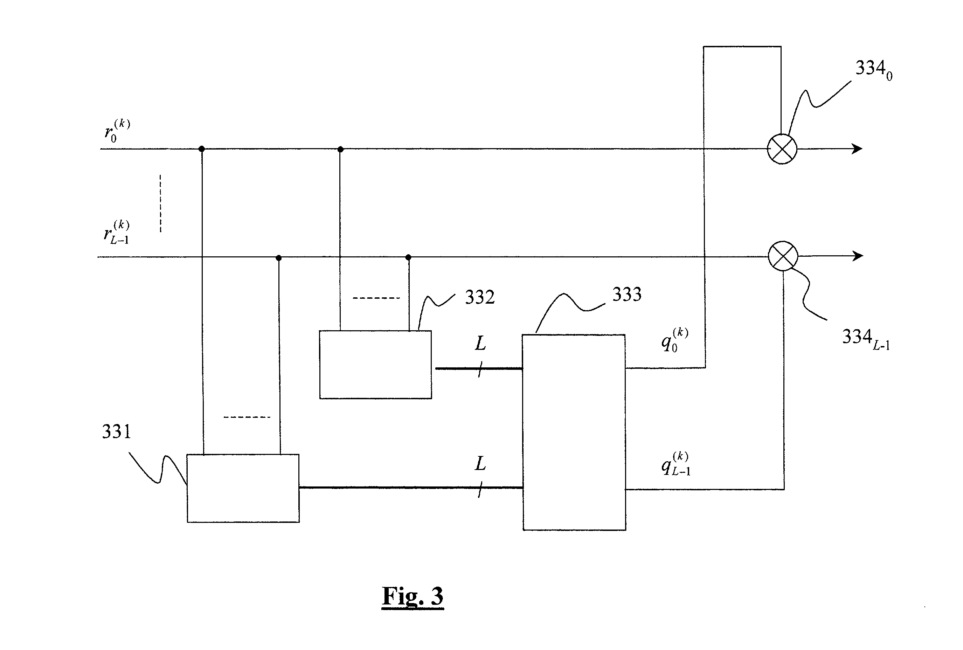

Fig. 3 illustrates schematically an equalisation method according to the invention.

The complex values $r_\ell$, $\ell=0,..,L\text{-}1$, relative to the different carriers at the output of the FFT module (i.e. module 220 in Fig. 2) are directed to the power estimation module 331 and the channel estimation module 332. The power estimation module estimates the power received by the different carriers (possibly multiplied by a common proportionality factor) e.g. according to expression (9) or (10). The channel estimation module estimates the channel coefficients $h_\ell$ relative to the different carriers (possibly multiplied by a common proportionality factor). For example, according to a channel estimation method known as such, pilot symbols are periodically sent by the MC-CDMA transmitter and the channel coefficients are determined from the complex values $r_\ell$ of the corresponding received symbols.

The equalisation coefficients $q^{(k)}$ are obtained by division in the module 333, in accordance with equation (11) or (12). The complex values $r_\ell$, $\ell = 0,...,L\text{-}1$ are then respectively multiplied by the multipliers $334_0,..,334_{L\text{-}1}$ with the equalisation coefficients $q^{(k)}_\ell$ to produce equalised signals.

It is important to note that if the symbols $d^{(k)}(n)$ for the user $k$ are spread over a subset of $N$ (where $N$ is preferably a submultiple of $L$), it suffices to calculate the equalisation coefficients for this subset of carriers. Hence, the estimation of the channel coefficients and the power values can be limited to this subset.

According to a first application of the invention, the equalisation method illustrated in Fig. 3 is implemented in the equalisation module 230 of the MC-CDMA receiver of Fig. 2. The equalised signals are then despread and the despread result is subjected to an automatic gain control.

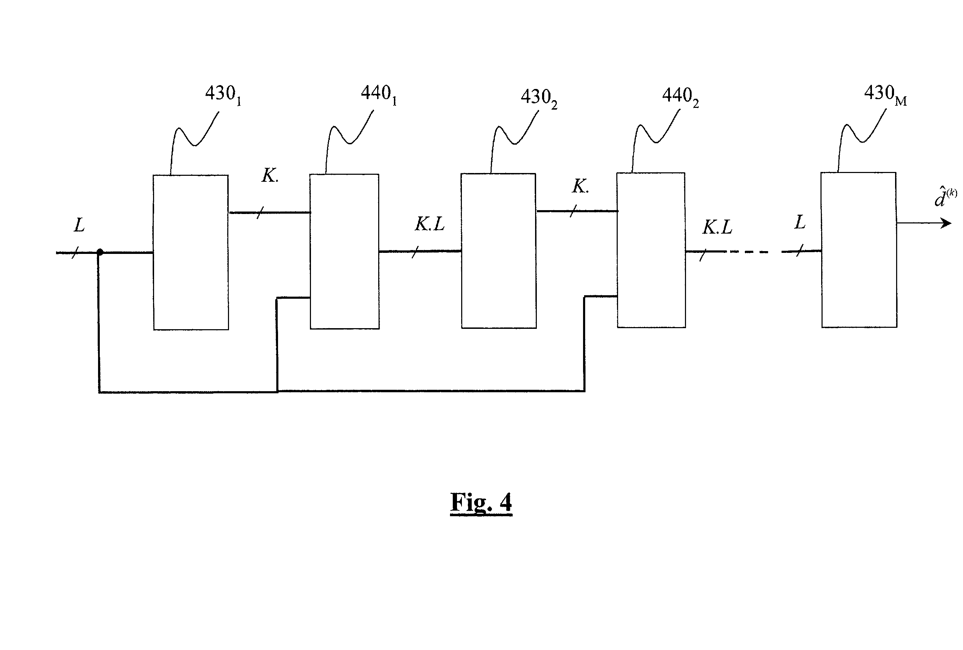

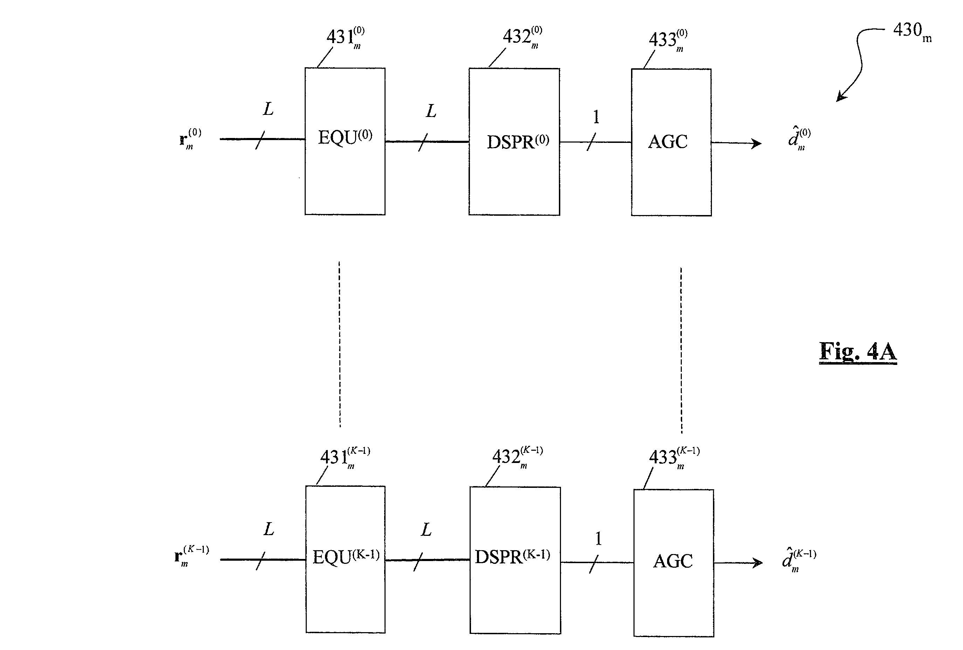

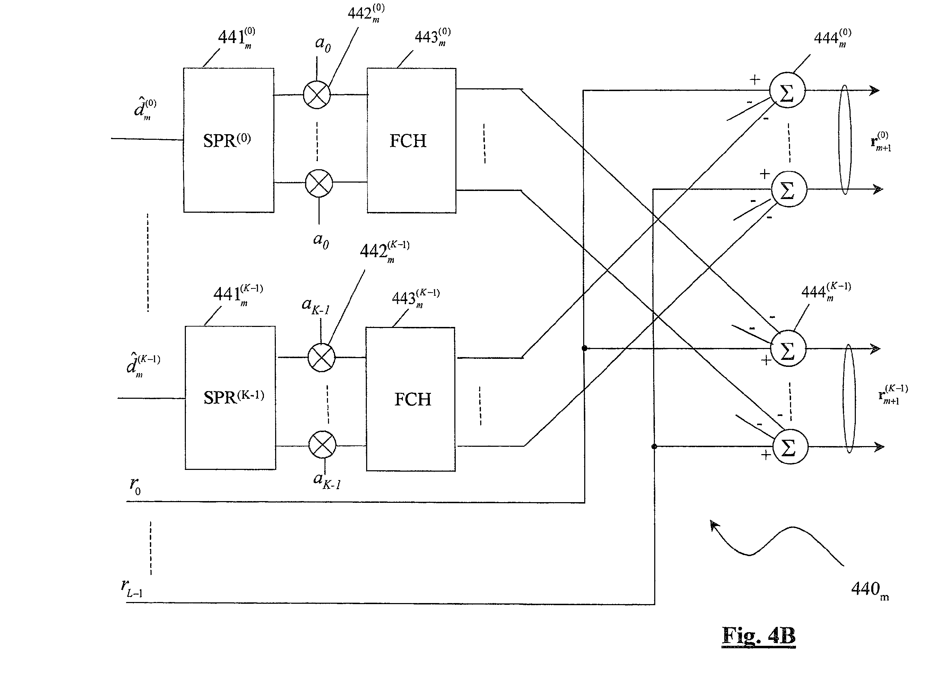

Fig. 4 illustrates the structure of a MC-CDMA receiver with parallel interference cancellation (PIC) associated to a given user $k$. This receiver is known as a multi-user detection receiver (or MUD receiver) because the detection takes also into account the symbols transmitted by the MC-CDMA transmitter to the users other than the one considered ($k$). In Fig. 4, only the part of the receiver downstream from the FFT module has been represented. It comprises a series of $M$ identical first stages $430_i$, $m=1,..,M$ alternating with a series of $M$-1 identical second stages $440_m$, $m=1,.. M$-1, the output of a first stage $430_m$ being the input of the subsequent second stage $440_m$ and the output of a second stage $440_m$ being the input of the subsequent first stage $430_{m+1}$. The $L$ complex values $r_\ell$, $\ell = 0,..,L\text{-}1$, output by the FFT are provided to each of second stages $440_m$. Finally, the stage $430_M$ outputs an estimate of the symbol transmitted to the user $k$ in question. It should be understood that the cascaded stages can be equivalently replaced by a single stage performing a series of iterations.

Fig. 4A illustrates schematically the process carried out in a first stage $430_m$. It receives $K$ interference cleared vectors $\mathbf{r}^{(q)}_{(m)}$, $q=0,..K\text{-}1$ each having $L$ components corresponding to the $L$ carriers. A vector $\mathbf{r}^{(q)}$ represents the frequency components of a MC-CDMA symbol transmitted to user $q$ in which the contribution due to the other users has been removed as shown further below. The vectors $\mathbf{r}^{(q)}_{(1)}$ of the first stage $430_1$ are all identical and their components are equal to the $L$ complex values, provided by the FFT. The $L$ frequency components of each of the vectors $\mathbf{r}^{(q)}_{(m)}$ are equalised by the module $431^{(q)}_m$, then despread in the module $432^{(q)}_m$ by the conjugate of the spreading code of user $q$ and the despread result is subjected to an automatic gain control in $433^{(q)}_m$. The output of $433^{(q)}_m$, denoted $d^{(q)}_m$ is used as such (soft decision) or subject to a hard or non linear decision (not shown), channel decoding and subsequent reencoding, the same notation $d^{(q)}_m$ being retained for all cases.

According to a second application of the invention the equalisation method of illustrated in Fig. 3 is implemented in the equalisation modules $431^{(q)}_m$, $q=0,..,K\text{-}1$. It should be understood that the calculation of the power values $P_\ell$ in the equalisation modules $431^{(q)}_1$ is the same for $q=0,..,K\text{-}1$. The power calculation can therefore be shared by the $K$ modules of the first stage.

Fig. 4B illustrates schematically the process carried out in a second stage $440_m$. This stage receives the $K$ estimates $d^{(q)}_m$, $q=0,..,K\text{-}1$ output by the preceding stage $430_m$ and the $L$ complex values $r_\ell$, $\ell = 0,..,L\text{-}1$ output from the FFT. Each estimate $d^{(q)}_m$ is spread by the spreading code of the corresponding user $q$ in module $441^{(q)}_m$. The spread signal can be expressed as a vector of $N$ frequency components (as mentioned in the introductory part, although $N$ has been assumed to $L$ for the sake of simplicity, sub-multiple values of $L$ can equally be envisaged). The components of the spread signal are then multiplied in $442^{(q)}_m$ by the amplitude coefficient $a_q$ before being filtered in the frequency domain by a transmission channel equivalent filter $443^{(q)}_m$. Advantageously, the transmission channel equivalent filter uses the estimates of the channel coefficients which have been determined at the preceding stage $430_m$ in the equalisation module $431^{(q)}_m$. The transmission channel equivalent filter may also be based upon an average over the estimates of the channel coefficients determined by the different equalisation modules $431^{(q)}_m$, $q=0,..,K\text{-}1$, at the preceding stage $430_m$, since all these estimates relate to the same (downlink) transmission channel. The components $R^{(q)}_{\ell,m}$ output by $443^{(q)}_m$ may be written :

$$R^{(q)}_{\ell,m} = a_q \hat{h}_\ell c^{(q)}_\ell \hat{d}^{(q)}_m \qquad (13)$$

where $\hat{h}_\ell$ are the estimates of the channel coefficients. The component $R^{(q)}_{\ell,m}$ reflects the contribution of user $q$ to the complex value $r_\ell$, i.e. the multi access interference (MAI) due to user $q$. Denoting $\mathbf{R}^{(q)}_m$ the vector of components $R^{(q)}_{\ell,m}$, $\ell =0,..,L\text{-}1$ and $\mathbf{r}$ the vector of components $r_\ell$, $\ell = 0,..,L\text{-}1$, the interference cleared vector $\mathbf{r}^{(q')}_{m+1}$ is obtained by subtracting (in $444^{(q')}_m$) from $\mathbf{r}$ the contribution of the users $q \neq q'$, i.e.:

$$\mathbf{r}_{m+1}^{(q')} = \mathbf{r} - \sum_{\substack{q=0 \\ q \neq q'}}^{K-1} \mathbf{R}_m^{(q)} \qquad\qquad (14)$$

and these $K$ interference cleared vectors are output to the next stage $430_{m+1}$.

From one stage to the next, the evaluation of the MAI is refined and the estimation of the transmitted symbols $d_m^{(q)}$ is improved. At the last stage $430_M$, only the estimation of the symbol transmitted to the user $k$ of interest is exploited.

It should be noted that the MC-CDMA receiver of Fig. 4 requires the knowledge of the number $K$ of users, their respective spreading sequences and amplitude coefficients $a_q$ for the parallel interference cancellation (e.g. in $442_m^{(q)}$). However, it is important to note that, advantageously, the coefficients $a_q$ used for multiplication in $442_m^{(q)}$ can be estimated (in relative values) by taking the AGC coefficients respectively used in the AGC modules $443_m^{(q)}$. They therefore need not be sent by the MC-CDMA transmitter.

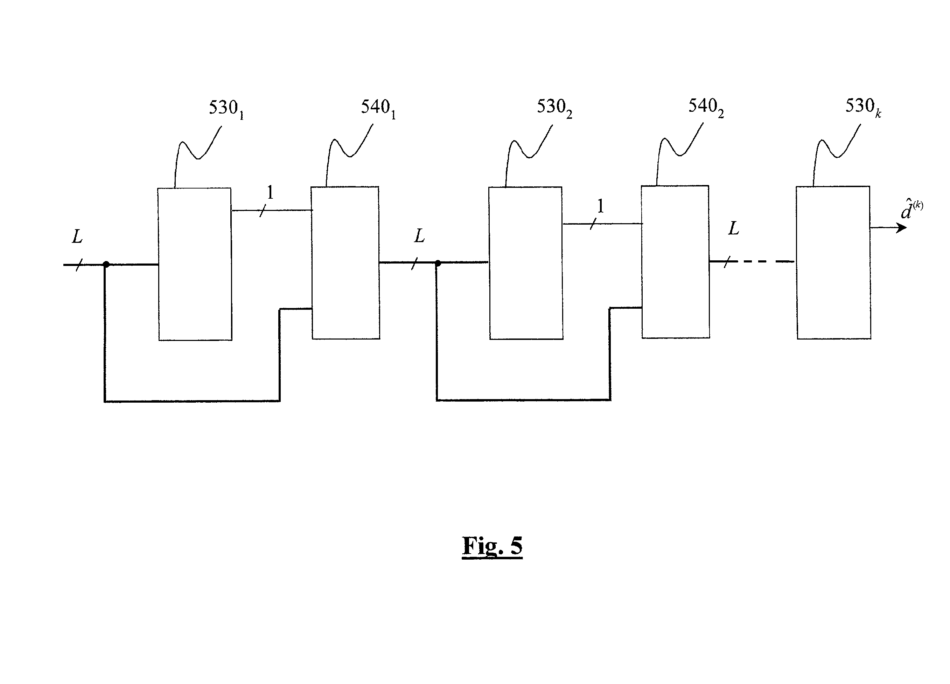

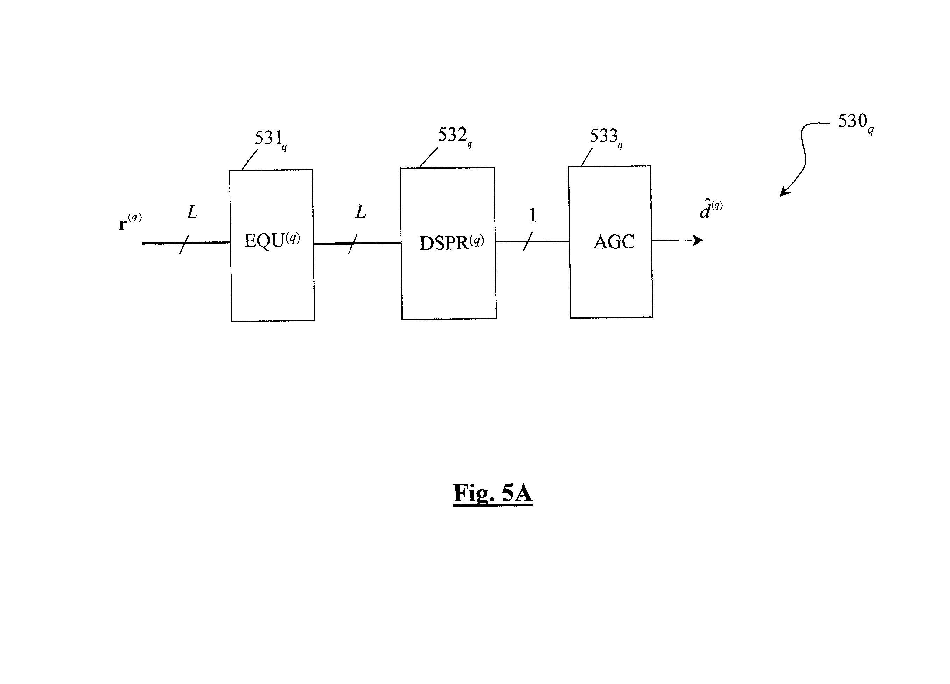

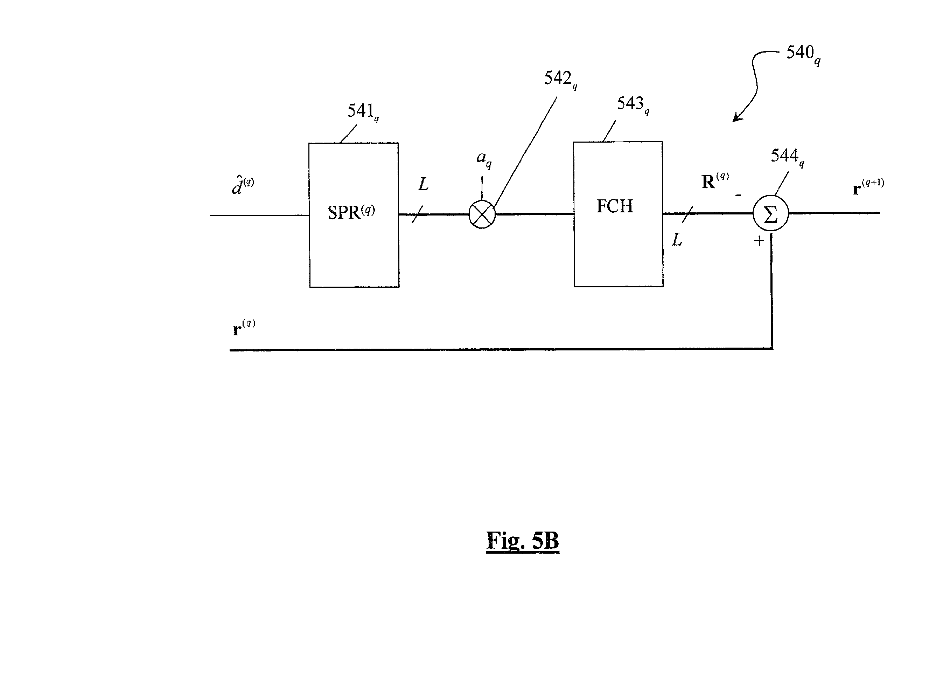

Fig. 5 illustrates the structure of a MC-CDMA receiver with serial interference cancellation (SIC) associated to a user $k$. This receiver is a multi-user detection receiver (or MUD receiver) because the symbols transmitted to users other than $k$ are estimated for the purpose of MAI removal.

Here again, only the part of the receiver downstream from the FFT module has been represented. The receiver comprises a series of identical first stages $530_q$ alternating with a series of identical second stages $540_q$, the output of a first stage $530_q$ being the input of the subsequent second stage $540_q$ and the output of a second stage $540_q$ being the input of the subsequent first stage $530_{q+1}$. A couple of first and second stages $530_q$, $540_q$ is related to a user $q$, the first stage $530_q$ estimating the symbol transmitted to said user, the associated second stage $540_q$ estimating the MAI due to said user. The number of stages depends upon the number of users the MAI of which is to be removed. Advantageously, the users are ranked by decreasing received power at the MC-CDMA receiver side so that the symbol detection and the MAI estimation starts with the most interfering ones. The process terminates in $530_k$ with the estimation of the symbol transmitted to the user $k$ in question.

Fig. 5A depicts schematically the process carried out in a first stage $530_q$. It receives an interference cleared vector $\mathbf{r}^{(q)}$ where the MAI due to the $q$ most energetic users has been removed. The first stage $530_0$ directly receives the vector $\mathbf{r}^{(0)} = \mathbf{r}$ of components $r_\ell$, $\ell = 0,..,L-1$, output from the FFT.. The $L$ frequency components of each of the vectors $\mathbf{r}^{(q)}$ are equalised in the module $531_q$, then despread in the module $532_q$ by the conjugate of the spreading code of user $q$ and the despread result is subjected to an automatic gain control in $533_q$. The output of $533_q$, denoted $\hat{d}^{(q)}$ is used as such (soft decision) or subject to a hard or non-linear decision (not shown), channel decoding and subsequent reencoding, the same notation $\hat{d}^{(q)}$ being retained for all cases.

According to a third application of the invention, the equalisation method illustrated in Fig. 3 is implemented in the equalisation modules $531^{(q)}$.

Fig. 5B illustrates schematically the process carried out in a second stage $540_q$. This stage receives the symbol estimate $\hat{d}^{(q)}$ on the one hand and the interference cleared vector $\mathbf{r}^{(q)}$ on the other hand. The symbol estimate $\hat{d}^{(q)}$ is spread by the spreading code of the user $q$ in module $541_q$. The spread signal can be expressed as a vector of $N$ frequency components (assumed equal to $L$ for the sake of simplicity) The components of the spread signal are then multiplied in $542_q$ by the amplitude coefficient $a_q$ before being filtered in the frequency domain by a transmission channel equivalent filter $543_q$. Advantageously, the transmission channel equivalent filter uses the estimates of the channel coefficients which have been determined at the preceding stage $530_q$ in the equalisation module $531_q$.

The components $R_\ell^{(q)}$ output by $543_q$ may be written :

$$R_\ell^{(q)} = a_q \hat{h}_\ell \hat{c}_\ell^{(q)} \hat{d}^{(q)} \qquad\qquad (15)$$

where $\hat{h}_\ell$ are the estimates of the channel coefficients. The component $R_\ell^{(q)}$ reflects the contribution of user $q$ to the complex value $r_\ell$, i.e. the multi access interference (MAI) due to user $q$. Denoting $\mathbf{R}^{(q)}$ the vector of components $R_\ell^{(q)}$, $\ell = 0,..,L-1$ the interference cleared vector $\mathbf{r}^{(q+1)}$ is obtained by subtracting (in $544_q$) from $\mathbf{r}^{(q)}$ the MAI due to the user $q$ , i.e.:

$$\mathbf{r}^{(q+1)} = \mathbf{r}^{(q)} - \mathbf{R}^{(q)} \qquad\qquad (16)$$

Here again, the MC-CDMA receiver of Fig. 5 requires the knowledge of the number $K$ of users, their respective spreading sequences and amplitude coefficients $a_q$ for the serial interference cancellation (e.g. in $542_m^{(q)}$). However,

it is important to note that, if the variations of the amplitude coefficients $a_q$ are small from one MC-CDMA symbol to the next, the coefficients $a_q$ in $542^{(q)}$ can be advantageously estimated (in relative values) by taking the AGC coefficients respectively used in the AGC modules $543^{(q)}$ for the previous symbol . The amplitude coefficients therefore need not be sent by the MC-CDMA transmitter.

Although the structure of the MC-CDMA receivers using the equalisation method according to the invention have been essentially described in terms of functional modules e.g. filters or multipliers, it goes without saying that all or part of these devices can be implemented by means of a single processor either dedicated for fulfilling all the functions depicted or in the form of a plurality of processors either dedicated or programmed for each fulfilling one or some of said functions.

**Claims**

1. Method for performing an equalisation in a MC-CDMA receiver, the symbols transmitted to said receiver being spread with a spreading sequence over a plurality ($N$) of carriers, the signal received by said receiver being decomposed into a plurality of frequency components ($r_\ell$), **characterised by** estimating (331) relative power values on each of said carriers, calculating (333) a plurality of equalisation coefficients ($q_\ell$) from the estimated relative power values$(\hat{P}_\ell,(\mu.\hat{P}_\ell))$ and multiplying ($334_0$,..,$334_{L-1}$) each of said frequency components by one of said equalisation coefficients .

2. Method for performing an equalisation in a MC-CDMA receiver according to claim 1, **characterised by** estimating (332), at the frequencies of said carriers, the relative channel coefficients$(\hat{h}_\ell,(\lambda.\hat{h}_\ell))$ of the transmission channel over which said symbols have propagated.

3. Method for performing an equalisation in a MC-CDMA receiver according to claim 2, **characterised that** for a given carrier an equalisation coefficient is obtained by dividing the estimated relative channel coefficient at the carrier frequency with the estimated relative power value on that carrier.

4. Method for performing an equalisation in a MC-CDMA receiver according to any of preceding claims, **characterised in that** the relative power value on a carrier is estimated by low pass filtering samples of the square value of the component of said received signal at the frequency of said carrier.

5. Method for performing an equalisation in a MC-CDMA receiver according to claim 4, **characterised in that** the relative power value on a carrier is estimated by averaging samples of the square value of the component of said received signal at the frequency of said carrier.

6. Multi-carrier CDMA receiver in a MC-CDMA telecommunication system **characterised by** comprising decomposing means for decomposing a received signal into a plurality of frequency components carried by a plurality of carriers, equalising means for multiplying each of said frequency components with an equalisation coefficient, **characterised in that** said equalising means further comprise means for estimating relative power values on each of said carriers and means for calculating the equalisation coefficients from the estimated relative power values .

7. Multi-carrier CDMA receiver in a MC-CDMA telecommunication system, said receiver being dedicated to a user of said system, **characterised in that** it comprises decomposing means for decomposing a received signal into a plurality of frequency components carried by a plurality of carriers, interference removing means for removing from each of said frequency components the contribution due to signals transmitted to at least another user of said system, said interference removing means producing interference cleared frequency components carried by said plurality of carriers, said receiver further comprising equalising means for multiplying each of said removed frequency components with an equalisation coefficient, said equalising means comprising means for estimating relative power values on each of said carriers after interference removal and means for calculating the equalisation coefficients from the estimated relative power values .

**Fig. 1**

**Fig. 2**

**Fig. 3**

EP 1 359 700 A1

**Fig. 4**

Fig. 4A

EP 1 359 700 A1

**Fig. 4B**

EP 1 359 700 A1

**Fig. 5**

EP 1 359 700 A1

EP 1 359 700 A1

$531_q$

$532_q$

$533_q$

$530_q$

$\mathbf{r}^{(q)}$  $L$ | $\text{EQU}^{(q)}$ | $L$ | $\text{DSPR}^{(q)}$ | $1$ | $\text{AGC}$ | $\hat{d}^{(q)}$

**Fig. 5A**

**Fig. 5B**

**European Patent Office**

## EUROPEAN SEARCH REPORT

Application Number

EP 02 29 1107

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SAELZER T ET AL: "INFLUENCE OF SYSEM LOAD ON CHANNEL ESTIMATION IN MC-CDMA MOBILE RADIO COMMUNICATION SYSTEMS" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, vol. 1 OF 4. CONF. 53, 6 May 2001 (2001-05-06), pages 522-526, XP001063193 ISBN: 0-7803-6728-6 * page 522, column 1, line 38 - column 2, line 1 * * page 522, column 2, line 10 - line 30 * * page 523, column 1, line 41 - column 2, line 30 * * page 524, column 1, line 1 - line 34 * --- | 1-7 | H04L5/02 H04L25/03 H04L27/26 |
| X | MOTTIER D ET AL: "Optimum and sub-optimum linear MMSE multi-user detection for multi-carrier CDMA transmission systems" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, vol. 1 OF 4. CONF. 54, 7 October 2001 (2001-10-07), pages 868-872, XP010562553 ISBN: 0-7803-7005-8 * abstract * * page 868, column 1, line 39 - line 46 * * page 868, column 2, line 36 - line 44 * * page 869, column 1, line 34 - line 48 * * page 870, column 1, line 5 - page 871, column 1, line 20 * ----- | 1-7 | TECHNICAL FIELDS SEARCHED (Int.Cl.7) H04L |

The present search report has been drawn up for all claims

| Place of search | Date of completion of the search | Examiner |
|---|---|---|
| BERLIN | 22 October 2002 | Binger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)